(19) Europäisches Patentamt
European Patent Office
Office européen des brevets

(11) **EP 3 044 179 B1**

(12) **FASCICULE DE BREVET EUROPEEN**

(45) Date de publication et mention
de la délivrance du brevet:
**21.06.2017 Bulletin 2017/25**

(21) Numéro de dépôt: **14796160.1**

(22) Date de dépôt: **09.09.2014**

(51) Int Cl.:
*C03C 25/32* (2006.01)      *C08J 5/04* (2006.01)
*C08J 5/24* (2006.01)       *C08K 3/32* (2006.01)
*C08K 5/00* (2006.01)       *C08K 5/092* (2006.01)
*C08K 5/1545* (2006.01)     *C09J 103/00* (2006.01)
*C09J 103/02* (2006.01)     *C09J 105/00* (2006.01)
*C08L 3/00* (2006.01)       *C08L 5/00* (2006.01)
*C08L 5/02* (2006.01)       *D04H 1/4218* (2012.01)
*D04H 1/587* (2012.01)

(86) Numéro de dépôt international:
**PCT/FR2014/052224**

(87) Numéro de publication internationale:
**WO 2015/033084 (12.03.2015 Gazette 2015/10)**

(54) **COMPOSITION D'ENCOLLAGE POUR LAINE MINÉRALE ET PRODUITS ISOLANTS OBTENUS**

LEIMUNGSZUSAMMENSETZUNG FÜR MINERALWOLLE UND DARAUS ERZEUGTE ISOLIERPRODUKTE

SIZING COMPOSITION FOR MINERAL WOOL AND INSULATING PRODUCTS OBTAINED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.09.2013 FR 1358626**

(43) Date de publication de la demande:
**20.07.2016 Bulletin 2016/29**

(73) Titulaire: **Saint-Gobain Isover**
**92400 Courbevoie (FR)**

(72) Inventeurs:
• **SAVONNET, Marie**
**F-75012 Paris (FR)**
• **OBERT, Edouard**
**F-60700 Fleurines (FR)**

(74) Mandataire: **Saint-Gobain Recherche**
**Département Propriété Industrielle**
**39 Quai Lucien Lefranc**
**93300 Aubervilliers (FR)**

(56) Documents cités:
WO-A1-2012/138723      WO-A1-2012/166414
US-A1- 2009 156 724    US-A1- 2011 210 280
US-A1- 2013 032 749

**Description**

La présente invention se rapporte au domaine des produits d'isolation, thermiques et/ou acoustiques, à base de laine minérale, notamment de verre ou de roche, et d'un liant organique exempt de formaldéhyde.

L'invention concerne plus particulièrement une composition d'encollage apte à réticuler pour former ledit liant organique, qui renferme un saccharide réducteur, un saccharide hydrogéné, un agent de réticulation polyfonctionnel et un polyglycérol.

L'invention a également pour objet les produits isolants acoustique et/ou thermique à base de laine minérale qui en résultent.

La fabrication de produits d'isolation à base de laine minérale comprend généralement une étape de fabrication de la laine elle-même, qui peut être mise en oeuvre par différents procédés, par exemple selon la technique connue du fibrage par centrifugation interne ou externe.

La centrifugation interne consiste à introduire la matière minérale en fusion (verre ou roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour y former une nappe de fibres (ou laine minérale).

La centrifugation externe consiste, quant à elle, à déverser la matière en fusion à la surface périphérique externe d'organes rotatifs appelés rotors, d'où la matière en fusion est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on projette sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Les résols les plus usuels sont obtenus par condensation de phénol et de formaldéhyde, en présence d'un catalyseur basique. Au final, ces résols contiennent une certaine proportion de monomères n'ayant pas réagi, en particulier le formaldéhyde dont la présence n'est pas souhaitée à cause de ses effets nocifs avérés.

Pour cette raison, les résines à base de résol sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux propriétés mécaniques du produit final, ce qui abaisse notablement le coût total de la résine.

Il a néanmoins été observé que, dans les conditions de températures auxquelles la nappe est soumise pour obtenir la réticulation de la résine, les condensats urée-formaldéhyde ne sont pas stables ; ils se décomposent en redonnant du formaldéhyde et de l'urée, à son tour dégradée au moins partiellement en ammoniac, qui sont libérés dans l'atmosphère de l'usine.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde.

Des solutions de remplacement des résols dans les compositions d'encollage sont connues et se fondent sur l'emploi d'un d'acide carboxylique et d'un alcool.

Dans US 5 340 868, l'encollage comprend un polymère polycarboxylique, un β-hydroxylamine et un acide carboxylique monomérique au moins trifonctionnel.

Il a aussi été décrit des compositions d'encollage comprenant une alcanolamine renfermant au moins deux groupements hydroxyle et un polymère polycarboxylique (US 6 071 994, US 6 099 773, US 6 146 746) qui peuvent être associés à un copolymère (US 6 299 936).

Il a aussi été proposé des compositions d'encollage comprenant un polymère polycarboxylique et un polyol (US 2002/0091185, US 2002/0091185). Ces compositions peuvent contenir en outre un catalyseur qui peut être un composé contenant du phosphore (US 5 318 990, US 5 661 213, US 6331 350, US 2003/0008978), un fluoroborate (US 5 977 232) ou bien un cyanamide, un dicyanamide ou une cyanoguanidine (US 5 932 689), ou un tensioactif cationique, amphotère ou non ionique (US 2002/0188055), ou encore un agent de couplage de type silane (US 2004/0002567).

Dans WO 2006/120523, il est décrit une composition d'encollage qui comprend (a) un poly(alcool vinylique), (b) un agent de réticulation multifonctionnel choisi parmi les polyacides non polymériques ou leurs sels, les anhydrides ou un polyaldéhyde non polymérique et (c) éventuellement un catalyseur, le rapport pondéral (a)/(b) variant de 95:5 à 35:65 et le pH étant au moins égal à 1,25.

On connaît également de WO 2008/053332 une composition d'encollage qui comprend un adduit (a) d'un polymère de sucre et (b) d'un agent de réticulation multifonctionnel choisi parmi les polyacides monomériques ou leurs sels, et les anhydrides, qui est obtenu dans des conditions telles que le rapport pondéral (a)/(b) varie de 95:5 à 35:65.

Par ailleurs, il a été décrit des compositions d'encollage dont tout ou partie de l'alcool est remplacé par un ou plusieurs saccharides.

Dans US 2005/0215153, la composition d'encollage est formée à partir d'un pré-liant contenant un polymère d'acide carboxylique et d'un polyol, et d'une dextrine en tant que co-liant.

Dans US 5 895 804, la composition d'encollage comprend un polymère polycarboxylique de poids moléculaire au moins égal à 1000 et un polysaccharide de poids moléculaire au moins égal à 10000.

Dans WO 2009/080938, la composition d'encollage comprend au moins un acide organique polycarboxylique de masse molaire inférieure ou égale à 1000 et au moins un monosaccharide et/ou polysaccharide.

On connaît de WO 2010/029266 une composition d'encollage qui comprend au moins un sucre hydrogéné et un agent de réticulation polyfonctionnel.

Enfin, il est décrit dans WO 2013/021112 une composition d'encollage pour laine minérale qui comprend au moins un saccharide réducteur, au moins un saccharide hydrogéné et au moins un agent de réticulation polyfonctionnel, et dans laquelle composition le saccharide hydrogéné représente 10 à 90 % du poids total du saccharide réducteur et du saccharide hydrogéné.

Enfin il est décrit dans WO 2012/138723une composition d'encollage pour des produits isolants à base de laine minérale qui comprend a moins un hydrate de carbone, un agent de réticulation et un produit de réaction d'un alcool ou d'un polyol avec un acide polycarboxylique monomère ou polymère. Le but de la présente invention est d'améliorer la composition d'encollage précitée afin qu'elle confère de meilleures propriétés mécaniques aux produits isolants à base de laine minérale, en particulier une reprise d'épaisseur après compression accrue, sans réduire la résistance à la traction. Dans certains cas, cette dernière peut même être augmentée.

Ce but est atteint grâce à l'ajout d'au moins un polyglycérol dans la composition d'encollage.

Plus précisément, la composition d'encollage pour produit isolant à base de laine minérale, notamment de verre ou de roche, comprend

- au moins un saccharide réducteur,
- au moins un saccharide hydrogéné,
- au moins un agent de réticulation polyfonctionnel, et
- au moins un polyglycérol.

L'expression « saccharide réducteur » doit être entendue au sens conventionnel, à savoir qu'elle qualifie un monosaccharide ou un polysaccharide porteur d'un groupe OH hémiacétalique libre, ce groupe ayant notamment une action réductrice sur les solutions cupro-alcalines.

A titre d'exemples de monosaccharides réducteurs, on peut citer les saccharides réducteurs renfermant 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que glucose, le mannose et le galactose.

Le polysaccharide réducteur conforme à l'invention est choisi parmi les polysaccharides réducteurs ayant une masse molaire moyenne en poids inférieure à 100000, de préférence inférieure à 50000, avantageusement inférieure à 10000, et mieux encore supérieure à 180.

De manière avantageuse, le polysaccharide réducteur présente un indice de polydispersité (IP) défini par le rapport de la masse molaire moyenne en poids à la masse molaire moyenne en nombre qui est inférieur ou égal à 10.

De préférence, le polysaccharide réducteur renferme au moins un motif choisi parmi les aldoses précités, avantageusement le glucose. Sont particulièrement préférés les polysaccharides réducteurs qui sont constitués majoritairement (à plus de 50 % en poids) de motifs de glucose.

Selon un mode de réalisation préféré, l'invention utilise un mélange de monosaccharide(s) et/ou de polysaccharide(s) réducteurs, notamment obtenus à partir de végétaux, en particulier une dextrine.

Les dextrines sont des composés répondant à la formule générale $(C_6H_{10}O_5)_n$ obtenus par hydrolyse partielle d'amidon. Les procédés de préparation des dextrines sont connus. Par exemple, les dextrines peuvent être préparées en chauffant ou en séchant à sec un amidon, généralement en présence d'un catalyseur acide, ce qui conduit à la rupture des molécules d'amylose et d'amylopectine qui constituent ledit amidon en produits de masse molaire plus faible. Les dextrines peuvent aussi être obtenues en traitant l'amidon par voie enzymatique avec une ou plusieurs amylases, notamment microbiennes, aptes à hydrolyser les liaisons de l'amidon. La nature du traitement (chimique ou enzymatique) et les conditions d'hydrolyse ont une incidence directe sur la masse molaire moyenne et la distribution des masses molaires de la dextrine.

Les dextrines conformes à l'invention peuvent être obtenues à partir d'amidon ou de dérivés d'amidon d'origine végétale variée, par exemple issues de tubercules tels que la pomme de terre, le manioc, le maranta et la patate douce, issues de graines telles que le blé, le maïs, le seigle, le riz, l'orge, le millet, l'avoine et le sorgho, issues de fruits tels que le marron, la châtaigne, et la noisette, ou issues de légumineuses telles que le pois et le haricot.

On préfère en particulier les dextrines ayant un équivalent en dextrose DE (« Dextrose Equivalent » en anglais) supérieur ou égal à 5, de préférence supérieur ou égal à 10, avantageusement supérieur ou égal à 15, et mieux encore inférieur à 100.

De manière conventionnelle, l'équivalent en dextrose DE est défini par la relation suivante :

$$DE = 100 \times \left( \frac{\text{nombre de liaisons glycosidiques rompues}}{\text{nombre de liaisons glycosidiques dans l'amidon initial}} \right)$$

Par « saccharide hydrogéné », on entend l'ensemble des produits résultant de la réduction, de quelque manière que ce soit, d'un saccharide choisi parmi les monosaccharides, les oligosaccharides, les polysaccharides linéaires, ramifiés ou cycliques, et les mélanges de ces produits, notamment les hydrolysats d'amidon.

L'hydrogénation du saccharide peut être effectuée par les méthodes connues opérant dans des conditions de pression d'hydrogène et de température élevées, en présence d'un catalyseur choisi dans les groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney. L'hydrogénation transforme le saccharide ou le mélange de saccharides (par exemple un hydrolysat d'amidon) en polyols correspondants.

Bien que n'étant pas préférée, l'hydrogénation peut être mise en oeuvre en l'absence de catalyseur d'hydrogénation, en présence d'une source d'hydrogène autre que le gaz hydrogène, par exemple un borohydrure de métal alcalin tel que le borohydrure de sodium.

A titre d'exemples de saccharides hydrogénés, on peut citer l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon, notamment commercialisés par la société Roquette sous la dénomination Polysorb®. De préférence, on utilise les produits d'hydrogénation d'hydrolysats d'amidon, avantageusement un sirop de maltitol.

Le saccharide hydrogéné conforme à l'invention possède une masse molaire moyenne en nombre inférieure à 100000, de préférence inférieure à 50000, avantageusement inférieure à 5000, plus particulièrement inférieure à 1000, et mieux encore supérieure à 150.

Dans la composition d'encollage, le(s) saccharide(s) hydrogéné(s) représente(nt) de préférence 18 à 80 % du poids total de(s) saccharide(s) réducteur(s) et de(s) saccharide(s) hydrogéné(s), avantageusement 30 à 70 % et mieux encore 35 à 60 %.

L'agent de réticulation polyfonctionnel est apte à réagir avec les groupes hydroxyles du saccharide réducteur, du saccharide hydrogéné et du polyglycérol sous l'effet de la chaleur pour former des liaisons esters qui conduisent à l'obtention d'un réseau polymérique dans le liant final. Ledit réseau polymérique permet d'établir des liaisons au niveau des points de jonction des fibres dans la laine minérale.

L'agent de réticulation polyfonctionnel est choisi parmi les acides organiques polycarboxyliques ou les sels de ces acides, les anhydrides et les polyaldéhydes.

Par « acide organique polycarboxylique », on entend un acide organique comprenant au moins deux fonctions carboxyliques, de préférence au plus 300, et avantageusement au plus 70, et mieux encore au plus 15 fonctions carboxyliques.

L'acide organique polycarboxylique peut être un acide non polymérique ou polymérique, il présente une masse molaire en nombre en général inférieure ou égale à 50000, de préférence inférieure ou égale à 10000 et avantageusement inférieure ou égale à 5000.

L'acide organique polycarboxylique non polymérique est un acide acyclique, ramifié ou non, saturé ou insaturé, un acide cyclique ou un acide aromatique.

L'acide organique polycarboxylique non polymérique peut être un acide dicarboxylique, par exemple l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique ; un acide tricarboxylique, par exemple l'acide citrique, l'acide tricarballylique, l'acide 1,2,4-butanetricarboxylique, l'acide aconitique, l'acide hémimellitique, l'acide triméllitique et l'acide trimésique ; un acide tétracarboxylique, par exemple l'acide 1,2,3,4-butanetétracarboxylique et l'acide pyroméllitique.

De manière particulièrement avantageuse, l'acide organique polycarboxylique non polymérique renferme deux à quatre fonctions carboxyliques.

A titre d'exemples d'acide organique polycarboxylique polymérique, on peut citer les homopolymères d'acide carboxylique insaturé tels que l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide $\alpha,\beta$-méthylèneglutarique et les monoesters d'acide dicarboxylique insaturés, tels que les maléates et les fumarates d'alkyle en $C_1$-$C_{10}$, et les copolymères d'au moins un acide carboxylique insaturé précité et d'au moins un monomère vinylique tel que le styrène, substitué ou non par des groupements alkyle, hydroxyalkyle ou sulfonyle, ou par un atome d'halogène, le (méth)acrylonitrile, le (méth)acrylamide, substitué ou non par des groupements alkyle en $C_1$-$C_{10}$, les alkyl(méth)acrylates, notamment le (méth)acrylate de méthyle, le (méth)acrylate d'éthyle, le (méth)acrylate de n-butyle et le (méth)acrylate d'isobutyle, le (méth)acrylate de glycidyle, le butadiène et un ester vinylique, notamment l'acétate de vinyle.

De préférence, la composition d'encollage comprend au moins un acide organique polycarboxylique non polymérique ayant une masse molaire en nombre inférieure ou égale à 1000, de préférence inférieure ou égale à 750 et avantageusement inférieure ou égale à 500, et renfermant deux à quatre fonctions carboxylique, éventuellement en mélange avec au moins un acide organique polymérique.

L'agent de réticulation polyfonctionnel peut être aussi un anhydride, notamment l'anhydride maléique, l'anhydride succinique ou l'anhydride phtalique. Toutefois, l'ajout d'un anhydride dans la composition d'encollage fait chuter fortement le pH ce qui entraîne des problèmes de corrosion des installations dans la ligne de fabrication et d'hydrolyse du saccharide hydrogéné. L'introduction d'une base permet d'amener le pH de la composition d'encollage à une valeur suffisante pour éviter ces problèmes. Le coût lié à l'ajout supplémentaire de la base fait que l'usage d'anhydride n'est pas préféré.

L'agent de réticulation polyfonctionnel peut encore être un polyaldéhyde.

Par « polyaldéhyde », on entend un aldéhyde comprenant au moins deux fonctions aldéhyde.

De préférence, le polyaldéhyde est un dialdéhyde non polymérique, par exemple le glyoxal, le glutaraldéhyde, le 1,6-hexanedial ou le dialdéhyde 1,4-téréphtalique.

Les polyaldéhydes ont une très grande réactivité vis-à-vis des groupes hydroxyle du saccharide réducteur et du saccharide hydrogéné mais aussi des groupes hydroxyle en général ce qui peut présenter des inconvénients, notamment une diminution de la stabilité et/ou une pré-gélification de la composition d'encollage avant le traitement de réticulation thermique. Pour prévenir ces inconvénients, les fonctions aldéhyde du polyaldéhyde sont avantageusement bloquées pour empêcher la réaction avec les constituants présents dans la composition d'encollage avant l'entrée de la laine minérale dans l'étuve. A titre d'exemple d'agent qui permet le blocage des fonctions aldéhyde, on peut citer l'urée et les urées cycliques.

Parmi les agents de réticulation polyfonctionnels précités, les acides organiques polycarboxyliques sont préférés.

Le polyglycérol conforme à l'invention présente un degré de polymérisation qui varie de 2 à 20, de préférence 2 à 10 et mieux encore de 2 à 8. Avantageusement, on utilise un mélange de polyglycérols contenant au moins 50 % en poids de diglycérol, de triglycérol et de tétraglycérol, et mieux encore de diglycérol et de triglycérol.

Dans la composition d'encollage, le(s) saccharide(s) réducteur(s) et le(s) saccharide(s) hydrogéné(s) représente(nt) 10 à 90 % du poids du mélange constitué par le(s) saccharide(s) réducteur(s), le(s) saccharide(s) hydrogéné(s) et l'agent de réticulation polyfonctionnel, de préférence 20 à 85 %, avantageusement 30 à 80 %, mieux encore 40 à 65 % et de manière particulièrement avantageuse 45 à 65 %.

Le(s) polyglycérol(s) représente(nt) généralement 2 à 50 % du poids total du(des) saccharide(s) réducteur(s), du(des) saccharide(s) hydrogéné(s) et de l'agent de réticulation, de préférence 5 à 25 % et avantageusement 7 à 15 %.

De manière générale, la composition d'encollage selon l'invention ne contient pas de monoalkylamine, dialkylamine et d'alcanolamine. Il n'est en effet pas souhaité que ces composés (qui sont aptes à réagir avec les autres constituants de la composition d'encollage) soient incorporés dans le réseau polymérique du liant final.

La composition d'encollage peut comprendre en outre un catalyseur, acide ou basique, qui a notamment pour fonction d'ajuster la température de début de réticulation.

Le catalyseur peut être choisi parmi les bases et les acides de Lewis, tels que les argiles, la silice colloïdale ou non, les amines organiques, les amines quaternaires, les oxydes métalliques, les sulfates métalliques, les chlorures métalliques, les sulfates d'urée, les chlorures d'urée et les catalyseurs à base de silicates.

Le catalyseur peut également être un composé contenant du phosphore, par exemple un sel d'hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium, le phosphite de sodium et les mélanges de ces composés.

La quantité de catalyseur introduite dans la composition d'encollage peut représenter jusqu'à 20 % du poids total du(des) saccharide(s) réducteur(s), du(des) saccharide(s) hydrogéné(s) et de l'agent de réticulation polyfonctionnel, de préférence jusqu'à 10 %, et avantageusement est au moins égale à 1 %.

La composition d'encollage conforme à l'invention peut comprendre en outre les additifs conventionnels ci-après dans les proportions suivantes calculées sur la base de 100 parts en poids de saccharide(s) réducteur(s), de saccharide(s) hydrogéné(s) et d'agent de réticulation polyfonctionnel :

- 0 à 2 parts de silane, en particulier un aminosilane ou un epoxysilane,
- 0 à 20 parts d'huile, de préférence 4 à 15 parts,
- 0 à 5 parts d'un silicone,
- 0 à 20 parts d'un polyol différent du saccharide réducteur, du saccharide hydrogéné et du polyglycérol précités,
- 0 à 30 parts d'un « extendeur » choisi parmi les dérivés de la lignine tel que le lignosulfonate d'ammonium (LSA) ou le lignosulfonate de sodium, et les protéines animales ou végétales.

Le rôle des additifs est connu et brièvement rappelé : le silane est un agent de couplage entre les fibres et le liant, et joue également le rôle d'agent anti-vieillissement ; les huiles sont des agents anti-poussières et hydrophobes ; le silicone est un agent hydrophobe qui a pour fonction de réduire l'absorption d'eau par le produit d'isolation ; l'« extendeur » est une charge organique soluble ou dispersable dans la composition d'encollage aqueuse qui permet notamment de diminuer le coût de la composition d'encollage.

Le polyol ajouté en tant qu'additif est nécessairement différent du saccharide réducteur, du saccharide hydrogéné et du polyglycérol. Ce polyol peut être notamment le glycérol, un glycol tel que l'éthylène glycol, le propylène glycol, le butylène glycol et les poly(alkylène) glycols à base de ces glycols, ou les homopolymères et copolymères d'alcool vinylique.

Lorsque l'agent de réticulation polyfonctionnel est un acide organique polycarboxylique, la composition d'encollage présente un pH acide, généralement inférieur ou égal à 5 et de préférence supérieur ou égal à 1,0. Avantageusement, le pH est maintenu à une valeur au moins égale à 1,5 de manière à limiter les problèmes d'instabilité de la composition d'encollage et de corrosion de la ligne de fabrication, grâce à l'ajout d'un composé aminé qui n'est pas apte à réagir avec le saccharide réducteur et le saccharide hydrogéné, par exemple une amine tertiaire, notamment la triéthanolamine. La quantité de composé aminé peut représenter jusqu'à 30 parts en poids du poids total de(s) saccharide(s) réducteur(s), de(s) saccharide(s) hydrogéné(s) et d'agent de réticulation, en particulier d'un acide organique polycarboxylique.

La composition d'encollage est destinée à être appliquée sur de la laine minérale, notamment de verre ou de roche.

De manière classique, la composition d'encollage est projetée sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température comparable à celle d'une résine formophénolique classique, à une température supérieure ou égale à 110°C, de préférence supérieure ou égale à 130°C, et avantageusement supérieure ou égale à 140°C.

Les produits isolants acoustiques et/ou thermiques obtenus à partir de ces fibres encollées constituent aussi un objet de la présente invention.

Ces produits se présentent généralement sous la forme d'un matelas ou d'un feutre de laine minérale, de verre ou de roche.

Les exemples qui suivent permettent d'illustrer l'invention sans toutefois la limiter.

Dans ces exemples, on mesure :

- la viscosité, exprimée en mPa.s, à l'aide d'un rhéomètre de type rotationnel cône-plan (diamètre : 6 mm ; 2°) avec un cisaillement qui varie de 5 à 500 s$^{-1}$, à 20°C.
- l'humidité du matelas constitué de la laine de verre encollée non réticulée, avant son passage dans l'étuve, par pesée avant et après séchage dans une enceinte à 105°C pendant 1 heure. L'humidité du matelas est exprimée en %.
- la résistance en traction selon la norme ASTM C 686-71 T sur un échantillon découpé par estampage dans le produit d'isolation. L'échantillon a la forme d'un tore de 122 mm de longueur, 46 mm de largeur, un rayon de courbure de la découpe du bord extérieur égal à 38 mm et un rayon de courbure de la découpe du bord inférieur égal à 12,5 mm.

L'échantillon est disposé entre deux mandrins cylindriques d'une machine d'essais dont l'un est mobile et se déplace à vitesse constante. On mesure la force de rupture F (en Newton) de l'échantillon et on calcule la résistance en traction RT définie par le rapport de la force de rupture F à la masse de l'échantillon. La résistance en traction est mesurée après la fabrication ($RT_{fab}$) et après traitement dans un autoclave pendant 15 minutes à 105°C et 100 % d'humidité relative ($RT_{15}$).

- l'épaisseur initiale du produit d'isolation et l'épaisseur après différentes périodes de temps sous compression avec un taux de compression (défini comme étant le rapport de l'épaisseur nominale à l'épaisseur sous compression) égal à 8/1. Les mesures d'épaisseur permettent d'évaluer la bonne tenue dimensionnelle du produit.

## EXEMPLES 1 A 6

Ces exemples illustrent la fabrication de produits d'isolation à base de laine de verre sur une ligne industrielle.

La laine minérale est produite en continu sur une ligne de 2,4 m de large par la technique de centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur passe ensuite en continu dans une étuve à 270°C où les constituants de l'encollage polymérisent pour former un liant.

Le produit d'isolation obtenu à la sortie de l'étuve présente une densité nominale égale à 10,6 kg/m$^3$ et une épaisseur nominale égale à 80 mm. La quantité de liant représente 5,2 $\pm$ 0,5 % du produit d'isolation.

Les compositions d'encollage utilisées sont données dans le tableau 1, les quantités étant exprimées en parts pondérales. Elles sont préparées par simple mélange des constituants dans de l'eau sous agitation vigoureuse jusqu'à dissolution ou dispersion complète des constituants.

Les exemples 1 à 4 selon l'invention présentent une résistance en traction plus élevée que l'exemple 6 comparatif qui contient du glycérol et comparable ou supérieure à celle de l'exemple 5 comparatif qui n'en contient pas.

L'épaisseur après 30 jours des produits des exemples 1 à 4 est supérieure à celle des exemples 5 et 6 comparatifs.

Par rapport aux exemples 5 et 6 comparatifs, la présence de polyglycérol dans les exemples 1 à 4 a l'avantage de réduire fortement (au moins la moitié) l'humidité du matelas encollé et de maintenir sa valeur à un niveau comparable à celui obtenu avec du glycérol.

## EXEMPLES 7 ET 8

On procède dans les conditions des exemples 1 à 6 modifiées en ce que la température de l'étuve est égale à 260°C, que le produit d'isolation obtenu présente une densité nominale égale à 17,5 kg/m$^3$ et une épaisseur nominale égale à 75 mm et que la composition d'encollage a la composition donnée dans le tableau 2 suivant, les quantités étant exprimées en parts pondérales.

| Tableau 2 | Ex. 7 | Ex. 8 (comp.) |
|---|---|---|
| **Composition** | | |
| Dextrine[1] | 31,00 | 55,00 |
| Sirop de maltitol[2] | 24,00 | - |
| Acide citrique | 45,00 | 45,00 |
| Polyglycérol | | |
| Oxicure® 510[4] | 10,00 | 10,00 |
| Hypophosphite de sodium | 5,00 | 5,00 |
| $\gamma$-aminopropyltriéthoxysilane | 0,50 | 0,50 |
| Huile minérale | 8,00 | 8,00 |
| Silicone | 0,90 | 0,90 |
| **Propriétés du produit** | | |
| Résistance en traction (N/g) | | |
| $RT_{fab}$ | 3,77 | 2,57 |
| $RT_{15}$ | 2,90 | 2,00 |
| Epaisseur (mm) | | |
| initiale | 106 | 82 |
| après 30 jours | 90 | 71 |

L'exemple 7 qui contient un sucre hydrogéné présente une résistance en traction (après fabrication et après traitement en autoclave) et une épaisseur (initiale et après 30 jours) plus élevées que l'exemple 8 comparatif qui n'en contient pas.

Tableau 1

| | Ex. 1 | Ex. 2 | Ex. 3 | Ex. 4 | Ex. 5 (comp.) | Ex. 6 (comp.) |
|---|---|---|---|---|---|---|
| **Composition** | | | | | | |
| Dextrin[1] | 31,00 | 31,00 | 31,00 | 33,10 | 31,00 | 31,00 |
| Sirop de maltitol[2] | 24,00 | 24,00 | 24,00 | 17,90 | 24,00 | 24,00 |
| Acide citrique | 45,00 | 45,00 | 45,00 | 49,00 | 45,00 | 45,00 |
| Polyglycérol | | | | | | |
| Diglycérol | 10,00 | - | - | - | - | - |
| PGLC3[3] | - | 10,00 | - | - | - | - |
| Oxicure® 510[4] | - | - | 10,00 | 7,25 | - | - |
| Glycérol | - | - | - | - | - | 10,00 |
| Hypophosphite de sodium | 5,00 | 5,00 | 5,00 | 5,30 | 5,00 | 5,00 |
| $\gamma$-aminopropyltriéthoxysilane | 0,50 | 0,50 | 0,50 | 0,50 | 0,50 | 0,50 |
| Huile minérale | 8,00 | 8,00 | 8,00 | 8,50 | 8,00 | 8,00 |
| Silicone | 0,90 | 0,90 | 0,90 | 0,90 | 0,90 | 0,90 |
| **Propriétés du matelas encollé avant passage dans l'étuve** | | | | | | |
| Humidité (%) | 5,0 | 6,5 | 5,5 | 6,0 | 12,0 | 5,0 |
| **Propriétés du produit** | | | | | | |
| Résistance en traction (N/g) | 1,76 | 1,94 | 1,93 | 1,90 | 1,80 | 1,69 |

(suite)

| | Ex. 1 | Ex. 2 | Ex. 3 | Ex. 4 | Ex. 5 (comp.) | Ex. 6 (comp.) |
|---|---|---|---|---|---|---|
| Epaisseur après 30 jours (mm) | 124 | 123 | 124 | 121 | 118 | 119 |

[1]dextrine issue d'amidon de maïs ; masse molaire moyenne en poids : 3510 ; indice de polydispersité IP : 5,2 ; équivalent en dextrose DE : 30 ; commercialisée sous la référence Roclys® C3072S par ROQUETTE FRERES

[2] sirop de maltitol à 75 % de matières sèches contenant 55 % de maltitol; commercialisé sous la référence Maltilite® 5575 par TEREOS-SYRAL

[3] mélange contenant (en % pondéral) : diglycérol (25,3 %), triglycérol (46,6 %), tétraglycérol (18,8 %), pentaglycérol (6,0 %), hexaglycérol (2,0 %) et heptaglycérol (0,7 %) ; commercialisé par Solvay

[4] mélange contenant (en % pondéral) : glycérol (29,0), diglycérol (30,0 %), triglycérol (19,0 %), tétraglycérol (11,0 %), pentaglycérol (6,0 %), hexaglycérol (3,0 %), heptaglycérol (1,0 %) et octaglycérol (1 %); commercialisé par Cargill n. d. : non déterminé

## Revendications

1. Composition d'encollage pour des produits isolants à base de laine minérale, notamment de roche ou de verre, **caractérisée en ce qu'**elle comprend

   - au moins un saccharide réducteur,
   - au moins un saccharide hydrogéné,
   - au moins un agent de réticulation polyfonctionnel, et
   - au moins un polyglycérol.

2. Composition selon la revendication 1, **caractérisée en ce que** le saccharide réducteur est choisi parmi les monosaccharides réducteurs renfermant 3 à 8 atomes de carbone, de préférence 5 à 7.

3. Composition selon la revendication 2, **caractérisée en ce que** le monosaccharide réducteur est un aldose.

4. Composition selon la revendication 3, **caractérisée en ce que** l'aldose est un hexose tel que le glucose, le mannose et le galactose.

5. Composition selon la revendication 1, **caractérisée en ce que** le saccharide réducteur est un polysaccharide réducteur présentant une masse molaire moyenne en poids inférieure à 100000, de préférence inférieure à 50000, avantageusement inférieure à 10000, et mieux encore supérieure à 180

6. Composition selon la revendication 5, **caractérisée en ce que** le polysaccharide réducteur est constitué à plus de 50 % en poids de motifs glucose.

7. Composition selon l'une des revendications 1 à 6, **caractérisée en ce que** le saccharide réducteur est un mélange de monosaccharide(s) réducteur(s) et/ou de polysaccharide(s) réducteur(s), en particulier une dextrine.

8. Composition selon la revendication 7, **caractérisée en ce que** la dextrine présente un équivalent en dextrose supérieur ou égal à 5, de préférence supérieur ou égal à 10, avantageusement supérieur ou égal à 15, et mieux encore inférieur à 100.

9. Composition selon l'une des revendications 1 à 8, **caractérisée en ce que** le saccharide hydrogéné est choisi parmi l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon.

10. Composition selon la revendication 9, **caractérisée en ce que** le saccharide hydrogéné est le produit d'hydrogénation d'un hydrolysat d'amidon, de préférence un sirop de maltitol.

11. Composition selon la revendication 9 ou 10, **caractérisée en ce que** le saccharide hydrogéné possède une masse molaire moyenne en nombre inférieure à 100000, de préférence inférieure à 50000, avantageusement inférieure à 5000, plus particulièrement inférieure à 1000, et mieux encore supérieure à 150.

**12.** Composition selon l'une des revendications 1 à 11, **caractérisée en ce que** le polyglycérol présente un degré de polymérisation qui varie de 2 à 20, de préférence 2 à 10 et mieux encore de 2 à 8.

**13.** Composition selon la revendication 12, **caractérisée en ce que** le polyglycérol est un mélange de polyglycérol contenant au moins 50 % en poids de diglycérol, de triglycérol et de tétraglycérol, et mieux encore de diglycérol et de triglycérol.

**14.** Composition selon l'une des revendications 1 à 13, **caractérisée en ce que** le(s) saccharide(s) hydrogéné(s) représente(nt) 18 à 80 % du poids total de(s) saccharide(s) réducteur(s) et de(s) saccharide(s) hydrogéné(s), de préférence 30 à 70 % et avantageusement 35 à 60 %.

**15.** Composition selon l'une des revendications 1 à 14, **caractérisée en ce que** l'agent de réticulation polyfonctionnel est choisi parmi les acides organiques polycarboxyliques ou les sels de ces acides, les anhydrides et les polyaldéhydes.

**16.** Composition selon la revendication 15, **caractérisée en ce que** l'acide organique polycarboxylique comprend au moins deux fonctions carboxyliques, de préférence au plus 300, et avantageusement au plus 70, et mieux encore au plus 15 fonctions carboxyliques.

**17.** Composition selon la revendication 16, **caractérisée en ce que** l'acide organique polycarboxylique est un acide non polymérique ou polymérique **et en ce qu'**il présente une masse molaire en nombre en général inférieure ou égale à 50000, de préférence inférieure ou égale à 10000 et avantageusement inférieure ou égale à 5000.

**18.** Composition selon la revendication 16 ou 17, **caractérisée en ce que** l'acide organique polycarboxylique est non polymérique et renferme deux à quatre fonctions carboxyliques.

**19.** Composition selon la revendication 15, **caractérisée en ce que** l'anhydride est l'anhydride maléique, l'anhydride succinique ou l'anhydride phtalique.

**20.** Composition selon la revendication 15, **caractérisée en ce que** le polyaldéhyde est un dialdéhyde non polymérique, tel que le glyoxal, le glutaraldéhyde, le 1,6-hexanedial ou le dialdéhyde 1,4-téréphtalique.

**21.** Composition selon l'une des revendications 1 à 20, **caractérisée en ce que** le(s) saccharide(s) réducteur(s) et le(s) saccharide(s) hydrogéné(s) représente(nt) 10 à 90 % du poids du mélange constitué par le(s) saccharide(s) réducteur(s), le(s) saccharide(s) hydrogéné(s) et l'agent de réticulation polyfonctionnel, de préférence 20 à 85 %, avantageusement 30 à 80 %, mieux encore 40 à 65 % et de manière particulièrement avantageuse 45 à 65 %.

**22.** Composition selon l'une des revendications 1 à 21, **caractérisée en ce que** le(s) polyglycérol(s) représente(nt) 2 à 50 % du poids total du(des) saccharide(s) réducteur(s), du(des) saccharide(s) hydrogéné(s) et de l'agent de réticulation polyfonctionnel, de préférence 5 à 25 % et avantageusement 7 à 15 %.

**23.** Composition selon l'une des revendications 1 à 22, **caractérisée en ce qu'**elle comprend en outre un catalyseur choisi parmi les acides et les bases de Lewis, les composés contenant du phosphore et les composés contenant du fluor et du bore.

**24.** Composition selon la revendication 20, **caractérisée en ce que** le catalyseur représente jusqu'à 20 % du poids total du(des) saccharide(s) réducteur(s), du(des) saccharide(s) hydrogéné(s) et de l'agent de réticulation polyfonctionnel, de préférence jusqu'à 10 %, et avantageusement est au moins égale à 1 %.

**25.** Composition selon l'une des revendications 1 à 24, **caractérisée en ce qu'**elle comprend en outre les additifs ci-après dans les proportions suivantes calculées sur la base de 100 parts en poids de saccharide(s) réducteur(s), de saccharide(s) hydrogéné(s) et d'agent de réticulation polyfonctionnel :

- 0 à 2 parts de silane, en particulier un aminosilane ou un epoxysilane,
- 0 à 20 parts d'huile, de préférence 4 à 15 parts,
- 0 à 5 parts d'un silicone,
- 0 à 20 parts d'un polyol différent du saccharide réducteur, du saccharide hydrogéné et du polyglycérol précités,
- 0 à 30 parts d'un « extendeur » choisi parmi les dérivés de la lignine tel que le lignosulfonate d'ammonium (LSA) ou le lignosulfonate de sodium, et les protéines animales ou végétales.

26. Produit isolant acoustique et/ou thermique à base laine minérale, notamment de verre ou de roche, encollée à l'aide de la composition d'encollage selon l'une des revendications 1 à 25.


**Patentansprüche**

1. Bindemittelzusammensetzung für Dämmstoffe auf der Basis von Mineralwolle, insbesondere Stein- oder Glaswolle, **dadurch gekennzeichnet, dass** sie Folgendes umfasst:

   - mindestens ein reduzierendes Saccharid,
   - mindestens ein hydriertes Saccharid,
   - mindestens ein polyfunktionelles Vernetzungsmittel und
   - mindestens ein Polyglycerin.

2. Zusammensetzung nach Anspruch 1, **dadurch gekennzeichnet, dass** das reduzierende Saccharid aus reduzierenden Monosacchariden mit 3 bis 8, vorzugsweise 5 bis 7 Kohlenstoffatomen ausgewählt ist.

3. Zusammensetzung nach Anspruch 2, **dadurch gekennzeichnet, dass** das reduzierende Monosaccharid eine Aldose ist.

4. Zusammensetzung nach Anspruch 3, **dadurch gekennzeichnet, dass** die Aldose eine Hexose, wie Glucose, Mannose und Galactose, ist.

5. Zusammensetzung nach Anspruch 1, **dadurch gekennzeichnet, dass** das reduzierende Saccharid ein reduzierendes Polysaccharid mit einer gewichtsmittleren Molekülmasse unter 100000, vorzugsweise unter 50000, vorzugsweise unter 10000 und noch besser über 180 ist.

6. Zusammensetzung nach Anspruch 5, **dadurch gekennzeichnet, dass** das reduzierende Polysaccharid zu mehr als 50 Gew.-% aus Glucoseeinheiten besteht.

7. Zusammensetzung nach einem der Ansprüche 1 bis 6, **dadurch gekennzeichnet, dass** das reduzierende Saccharid ein Gemisch von reduzierende(m/n) Monosaccharid(en) und/oder reduzierende(m/n) Polysaccharid(en), insbesondere ein Dextrin ist.

8. Zusammensetzung nach Anspruch 7, **dadurch gekennzeichnet, dass** das Dextrin ein Dextroseäquivalent von mehr als oder gleich 5, vorzugsweise mehr als oder gleich 10, vorteilhafterweise mehr als oder gleich 15 und noch besser von weniger als 100 aufweist.

9. Zusammensetzung nach einem der Ansprüche 1 bis 8, **dadurch gekennzeichnet, dass** das hydrierte Saccharid aus Erythrit, Arabit, Xylit, Sorbit, Mannit, Idit, Maltit, Isomaltit, Lactit, Cellobit, Palatinit, Maltotrit und den Hydrierungsprodukten von Stärkehydrolysaten ausgewählt ist.

10. Zusammensetzung nach Anspruch 9, **dadurch gekennzeichnet, dass** das hydrierte Saccharid das Hydrierungsprodukt eines Stärkehydrolysats, vorzugsweise ein Maltitsirups ist.

11. Zusammensetzung nach Anspruch 9 oder 10, **dadurch gekennzeichnet, dass** das hydrierte Saccharid eine zahlenmittlere Molekülmasse von unter 100000, vorzugsweise unter 50000, vorteilhafterweise unter 5000, insbesondere unter 1000 und noch besser über 150 aufweist.

12. Zusammensetzung nach einem der Ansprüche 1 bis 11, **dadurch gekennzeichnet, dass** das Polyglycerin einen Polymerisationsgrad aufweist, der von 2 bis 20, vorzugsweise von 2 bis 10 und noch besser von 2 bis 8 variiert.

13. Zusammensetzung nach Anspruch 12, **dadurch gekennzeichnet, dass** das Polyglycerin ein Polyglyceringemisch ist, das mindestens 50 Gew.-% Diglycerin, Triglycerin und Tetraglycerin und noch besser Diglycerin und Triglycerin enthält.

**14.** Zusammensetzung nach einem der Ansprüche 1 bis 13, **dadurch gekennzeichnet, dass** das (die) hydrierte(n) Saccharid(e) 18 bis 80%, bezogen auf das Gesamtgewicht des (der) reduzierenden Saccharid(s/e) und des (der) hydrierten Saccharid(s/e), vorzugsweise 30 bis 70% und vorteilhafterweise 35 bis 60% ausmacht/ausmachen.

**15.** Zusammensetzung nach einem der Ansprüche 1 bis 14, **dadurch gekennzeichnet, dass** das polyfunktionelle Vernetzungsmittel aus organischen Polycarbonsäuren oder den Salzen dieser Säuren, den Anhydriden und Polyaldehyden ausgewählt ist.

**16.** Zusammensetzung nach Anspruch 15, **dadurch gekennzeichnet, dass** die organische Polycarbonsäure mindestens zwei Carboxylfunktionen, vorzugsweise höchstens 300 und vorteilhafterweise höchstens 70 und noch besser höchstens 15 Carboxylfunktionen umfasst.

**17.** Zusammensetzung nach Anspruch 16, **dadurch gekennzeichnet, dass** die organische Polycarbonsäure eine nicht-polymere oder eine polymere Säure ist, und dadurch, dass sie eine zahlenmittlere Molekülmasse von im Allgemeinen weniger als oder gleich 50000, vorzugsweise weniger als oder gleich 10000 und vorteilhafterweise weniger als oder gleich 5000 aufweist.

**18.** Zusammensetzung nach Anspruch 16 oder 17, **dadurch gekennzeichnet, dass** die organische Polycarbonsäure nicht-polymer ist und zwei bis vier Carboxylfunktionen enthält.

**19.** Zusammensetzung nach Anspruch 15, **dadurch gekennzeichnet, dass** es sich bei dem Anhydrid um Maleinsäureanhydrid, Bernsteinsäureanhydrid oder Phthalsäureanhydrid handelt.

**20.** Zusammensetzung nach Anspruch 15, **dadurch gekennzeichnet, dass** das Polyaldehyd ein nichtpolymeres Dialdehyd, wie Glyoxal, Glutaraldehyd, 1,6-Hexandial oder 1,4-Terephthaldialdehyd, ist.

**21.** Zusammensetzung nach einem der Ansprüche 1 bis 20, **dadurch gekennzeichnet, dass** das (die) reduzierende(n) Saccharid(e) und das (die) hydrierte(n) Saccharid(e) 10% bis 90 Gew.-% des aus dem (den) reduzierenden Saccharid(en), dem (den) hydrierten Saccharid(en) und dem polyfunktionellen Vernetzungsmittel bestehenden Gemischs, vorzugsweise 20 bis 85 Gew.-%, vorteilhafterweise 30 bis 80 Gew.-%, noch besser 40 bis 65 Gew.-% und besonders vorteilhaft 45 bis 65 Gew.-% ausmacht/ausmachen.

**22.** Zusammensetzung nach einem der Ansprüche 1 bis 21, **dadurch gekennzeichnet, dass** das (die) Polyglycerin(e) 2 bis 50%, bezogen auf das Gesamtgewicht des (der) reduzierenden Saccharid(s/e), des (der) hydrierten Saccharid(s/e) und des polyfunktionellen Vernetzungsmittels, vorzugsweise 5 bis 25% und vorteilhafterweise 7 bis 15% ausmacht/ausmachen.

**23.** Zusammensetzung nach einem der Ansprüche 1 bis 22, **dadurch gekennzeichnet, dass** sie außerdem einen Katalysator umfasst, der aus Lewis-Säuren und -Basen, phosphorhaltigen Verbindungen und fluor- und borhaltigen Verbindungen ausgewählt ist.

**24.** Zusammensetzung nach Anspruch 20, **dadurch gekennzeichnet, dass** der Katalysator bis zu 20%, bezogen auf das Gesamtgewicht des (der) reduzierenden Saccharid(s/e), des (der) hydrierten Saccharid(s/e) und des polyfunktionellen Vernetzungsmittels, vorzugsweise bis zu 10% und vorteilhafterweise mindestens gleich 1% ausmacht.

**25.** Zusammensetzung nach einem der Ansprüche 1 bis 24, **dadurch gekennzeichnet, dass** sie außerdem die nachstehend aufgeführten Additive in den folgenden Anteilen, berechnet auf der Basis von 100 Gewichtsteilen reduzierende(s) Saccharid(e), hydrierte(s) Saccharid(e) und polyfunktionelles Vernetzungsmittel, umfasst:

- 0 bis 2 Teile Silan, insbesondere ein Aminosilan oder ein Epoxysilan,
- 0 bis 20 Teile Öl, vorzugsweise 4 bis 15 Teile,
- 0 bis 5 Teile eines Silikons,
- 0 bis 20 Teile eines anderen Polyols als das vorstehend genannte reduzierende Saccharid, hydrierte Saccharid und Polyglycerin,
- 0 bis 30 Teile eines "Extenders", ausgewählt aus Ligninderivaten, wie Ammoniumlignosulfonat (ALS) oder Natriumlignosulfonat, und tierischen oder pflanzlichen Proteinen.

**26.** Akustischer und/oder Wärme-Dämmstoff auf der Basis von Mineralwolle, insbesondere Glas- oder Steinwolle, der

**EP 3 044 179 B1**

mithilfe der Bindemittelzusammensetzung nach einem der Ansprüche 1 bis 25 gebunden ist.

**Claims**

1. A sizing composition for insulating products based on mineral wool, in particular rock or glass wool, **characterized in that** it comprises:

   - at least one reducing saccharide,
   - at least one hydrogenated saccharide,
   - at least one polyfunctional crosslinking agent, and
   - at least one polyglycerol.

2. The composition as claimed in claim 1, **characterized in that** the reducing saccharide is chosen from reducing monosaccharides including from 3 to 8 carbon atoms, preferably from 5 to 7 carbon atoms.

3. The composition as claimed in claim 2, **characterized in that** the reducing monosaccharide is an aldose.

4. The composition as claimed in claim 3, **characterized in that** the aldose is a hexose, such as glucose, mannose and galactose.

5. The composition as claimed in claim 1, **characterized in that** the reducing saccharide is a reducing polysaccharide having a weight-average molar mass of less than 100 000, preferably of less than 50 000, advantageously of less than 10 000 and better still of greater than 180.

6. The composition as claimed in claim 5, **characterized in that** the reducing polysaccharide is composed, to more than 50% by weight, of glucose units.

7. The composition as claimed in one of claims 1 to 6, **characterized in that** the reducing saccharide is a mixture of reducing monosaccharide(s) and/or reducing polysaccharide(s), especially a dextrin.

8. The composition as claimed in claim 7, **characterized in that** the dextrin exhibits a dextrose equivalent of greater than or equal to 5, preferably of greater than or equal to 10, advantageously of greater than or equal to 15 and better still of less than 100.

9. The composition as claimed in one of claims 1 to 8, **characterized in that** the hydrogenated saccharide is chosen from erythritol, arabitol, xylitol, sorbitol, mannitol, iditol, maltitol, isomaltitol, lactitol, cellobitol, palatinitol, maltotritol and the hydrogenation products of starch hydrolysates.

10. The composition as claimed in claim 9, **characterized in that** the hydrogenated saccharide is the hydrogenation product of a starch hydrolysate, preferably a maltitol syrup.

11. The composition as claimed in claim 9 or 10, **characterized in that** the hydrogenated saccharide has a number-average molar mass of less than 100 000, preferably of less than 50 000, advantageously of less than 5000, more particularly of less than 1000 and better still of greater than 150.

12. The composition as claimed in one of claims 1 to 11, **characterized in that** the polyglycerol exhibits a degree of polymerization which varies from 2 to 20, preferably from 2 to 10 and better still from 2 to 8.

13. The composition as claimed in claim 12, **characterized in that** the polyglycerol is a polyglycerol mixture comprising at least 50% by weight of diglycerol, of triglycerol and of tetraglycerol and better still of diglycerol and of triglycerol.

14. The composition as claimed in one of claims 1 to 13, **characterized in that** the hydrogenated saccharide(s) represent(s) from 18% to 80% of the total weight of the reducing saccharide(s) and hydrogenated saccharide(s), preferably from 30% to 70% and advantageously from 35% to 60%.

15. The composition as claimed in one of claims 1 to 14, **characterized in that** the polyfunctional crosslinking agent is chosen from organic polycarboxylic acids or the salts of these acids, anhydrides and polyaldehydes.

13

16. The composition as claimed in claim 15, **characterized in that** the organic polycarboxylic acid comprises at least two carboxyl functional groups, preferably at most 300, advantageously at most 70 and better still at most 15 carboxyl functional groups.

17. The composition as claimed in claim 16, **characterized in that** the organic polycarboxylic acid is a nonpolymeric or polymeric acid and **in that** it exhibits a number-average molar mass generally of less than or equal to 50 000, preferably of less than or equal to 10 000 and advantageously of less than or equal to 5000.

18. The composition as claimed in claim 16 or 17, **characterized in that** the organic polycarboxylic acid is nonpolymeric and includes from two to four carboxyl functional groups.

19. The composition as claimed in claim 15, **characterized in that** the anhydride is maleic anhydride, succinic anhydride or phthalic anhydride.

20. The composition as claimed in claim 15, **characterized in that** the polyaldehyde is a nonpolymeric dialdehyde, such as glyoxal, glutaraldehyde, 1,6-hexanedial or terephthaldehyde.

21. The composition as claimed in one of claims 1 to 20, **characterized in that** the reducing saccharide(s) and the hydrogenated saccharide(s) represent(s) from 10% to 90% of the weight of the mixture consisting of the reducing saccharide(s), the hydrogenated saccharide(s) and the polyfunctional crosslinking agent, preferably from 20% to 85%, advantageously from 30% to 80%, better still from 40% to 65% and particularly advantageously from 45% to 65%.

22. The composition as claimed in one of claims 1 to 21, **characterized in that** the polyglycerol(s) represent(s) from 2% to 50% of the total weight of the reducing saccharide(s), the hydrogenated saccharide(s) and the polyfunctional crosslinking agent, preferably from 5% to 25% and advantageously from 7% to 15%.

23. The composition as claimed in one of claims 1 to 22, **characterized in that** it additionally comprises a catalyst chosen from Lewis acids and bases, phosphorus-comprising compounds and compounds comprising fluorine and boron.

24. The composition as claimed in claim 20, **characterized in that** the catalyst represents up to 20% of the total weight of the reducing saccharide(s), the hydrogenated saccharide(s) and the polyfunctional crosslinking agent, preferably up to 10%, and is advantageously at least equal to 1%.

25. The composition as claimed in one of claims 1 to 24, **characterized in that** it additionally comprises the additives below in the following proportions, calculated on the basis of 100 parts by weight of reducing saccharide(s), of hydrogenated saccharide(s) and of polyfunctional crosslinking agent:

    - from 0 to 2 parts of silane, in particular an aminosilane or an epoxysilane,
    - from 0 to 20 parts of oil, preferably from 4 to 15 parts,
    - from 0 to 5 parts of a silicone,
    - from 0 to 20 parts of a polyol other than the abovementioned reducing saccharide, the abovementioned hydrogenated saccharide and the abovementioned polyglycerol,
    - from 0 to 30 parts of an "extender" chosen from lignin derivatives, such as ammonium lignosulfonate (ALS) or sodium lignosulfonate, and animal or plant proteins.

26. An acoustic and/or thermal insulating product based on mineral wool, in particular glass or rock wool, sized using the sizing composition as claimed in one of claims 1 to 25.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5340868 A
- US 6071994 A
- US 6099773 A
- US 6146746 A
- US 6299936 B
- US 20020091185 A
- US 5318990 A
- US 5661213 A
- US 6331350 B
- US 20030008978 A
- US 5977232 A
- US 5932689 A
- US 20020188055 A
- US 20040002567 A
- WO 2006120523 A
- WO 2008053332 A
- US 20050215153 A
- US 5895804 A
- WO 2009080938 A
- WO 2010029266 A
- WO 2013021112 A
- WO 2012138723 A